# EUROPÄISCHE PATENTSCHRIFT

(11) **EP 1 833 606 B1**
(45) Veröffentlichungstag und Bekanntmachung des Hinweises auf die Patenterteilung: **30.07.2008**
(21) Anmeldenummer: 06703388.6
(22) Anmeldetag: 04.01.2006
(51) Int. Cl.: B01J 38/48, B01D 53/86

(54) **VERFAHREN ZUM BEHANDELN VON KATALYSATOREN**
METHOD FOR TREATING CATALYSTS
PROCEDE DE TRAITEMENT DE CATALYSEURS

(30) Priorität: 05.01.2005 DE 102005000873
(43) Veröffentlichungstag der Anmeldung: 19.09.2007
(73) Patentinhaber: Evonik Energy Services GmbH, 45128 Essen (DE)
(72) Erfinder: BLOHM, Maik, 26123 Oldenburg (DE)
(74) Vertreter: Zenz, Joachim Klaus
(86) Internationale Anmeldenummer: PCT/EP2006/000022
(87) Internationale Veröffentlichungsnummer: WO 2006/072569

(56) Entgegenhaltungen:
- EP-A- 0 824 973
- WO-A-95/20434
- WO-A-20/04076067
- DE-A1- 10 325 779
- US-A1- 2002 006 860
- US-B1- 6 387 836
- PATENT ABSTRACTS OF JAPAN Bd. 007, Nr. 108 (C-165), 11. Mai 1983 (1983-05-11) & JP 58 030345 A (MITSUBISHI JUKOGYO KK), 22. Februar 1983 (1983-02-22)

## Beschreibung

Die Erfindung betrifft ein Verfahren zum Behandeln von Katalysatoren. Insbesondere betrifft die Erfindung ein Verfahren zum Reinigen von Kanal-Katalysatoren, welche eine Mehrzahl paralleler Kanäle aufweisen, die im Katalysatorbetrieb von einer Druckseite aus von einem Fluid durchströmt werden. Die Katalysatoren werden zur Durchführung der Behandlung bzw. der Reinigung außer Betrieb genommen und im montierten Zustand mit einer Flüssigkeit gespült, indem die Flüssigkeit durch die Kanäle der Katalysatoren geleitet wird.

Katalysatoren werden üblicherweise eingesetzt, um chemische Reaktionen zu beschleunigen oder zu begünstigen. Insbesondere werden Katalysatoren in industriellen Verbrennungsanlagen verwendet, um Fluidströme von mitgeführten Substanzen zu reinigen. Die Katalysatoren weisen eine Oberfläche mit aktiven Zentren auf, an denen die im Fluidstrom mitgeführten Substanzen absorbiert werden. Die absorbierten Substanzen werden einer Reaktion unterworfen und die Reaktionsprodukte desorbieren und werden von dem Fluidstrom weiter mitgetragen.

Bei der Verwendung von Katalysatoren in Verbrennungsanlagen wird bei der Verbrennung entstehendes Rauchgas durch Kanal-Katalysatoren an der Oberfläche der Katalysatoren vorbeigeleitet, um unerwünschte Substanzen in weniger kritische Substanzen umzuwandeln. Insbesondere werden Katalysatoren eingesetzt, um im Rauchgas vorhandene Stickoxide umzusetzen. Bei den sogenannten selektiven katalytischen Reduktionsverfahren (SCR) wird das NOₓ (Stickoxid) mit NH₃ (Ammoniak) zu Wasser und Stickstoff umgesetzt.

Die Oberfläche der Katalysatoren und der darauf befindlichen Zentren muß für den Fluidstrom zugänglich sein, damit der Katalysator seine katalytische Wirkung entfalten kann. Insbesondere müssen die Zugangswege zu der Oberfläche frei und die Oberfläche frei von Sperrschichten und Katalysatorgiften sein, die sich bei dem Betrieb des Katalysators mit der Zeit dort ansammeln. Sonst verlieren die Katalysatoren, bedingt durch Katalysatorgifte, blockierte Poren des Katalysators und Sperrschichten sowie verstopfte Kanäle, teilweise ihre Aktivität.

Aus der WO/00/001483 oder der WO/04/073835 sind Verfahren bekannt, um SCR-Katalysatoren mit Reinigungsmedien zu behandeln. Dazu müssen die Katalysatoren jedoch aus dem montierten betriebsbereiten Zustand demontiert, transportiert, behandelt, erneut transportiert und montiert werden.

Die US 6,631,727 beschreibt ein Verfahren, bei dem Katalysatoren (Katalysatorblöcke) im montierten Zustand behandelt werden, indem ein Reinigungsmittel von oben durch die Kanäle geleitet und auf der anderen Seite der Kanäle aufgefangen wird. Einerseits werden bei dieser einseitigen Spülung nicht alle Verschmutzungen gelöst, andererseits ist das Verfahren aufwendig, da auf beiden Seiten der Katalysatorblöcke Arbeitsebenen vorzusehen sind, auf denen Material zum Einleiten und/oder zum Auffangen der Flüssigkeit bereitzustellen ist.

Die EP-A-0 824 973 offenbart eine Reinigungsanlage für Katalysatoren. Die Anlage ist in einen Reaktor integriert und so angeordnet, dass die Katalysatorschichten von oben mit Wasser besprüht werden, wobei unterhalb der Katalysatoren die Waschflüssigkeit aufgefangen wird. Die Katalysatoren können dabei auch von oben und unten gleichzeitig oder nacheinander besprüht werden.

Aufgabe der Erfindung ist es, ein Verfahren zur Verfügung zu stellen, welches eine einfache, effiziente und kostengünstige Reinigung von Katalysatoren erlaubt.

Die Aufgabe wird erfindungsgemäß durch ein Verfahren mit Merkmalen des Patentanspruchs 1 gelöst.

In ein Bündel von benachbarten Kanälen eines außer Betrieb genommenen, jedoch im montierten Zustand befindlichen Katalysators wird Flüssigkeit unter Druck eingeleitet. Die Flüssigkeit wird dabei von der der Druckseite abgewandten Seite des Katalysators eingeleitet, also der Seite, an der im Katalysatorbetrieb das zu behandelnde Fluid (Rauchgas) austritt. Diese Seite liegt im Fluidstrom tiefer als die Druckseite, d.h. der Fluidstrom durchströmt den Katalysator von der Druckseite her in Richtung der Wirkung der Schwerkraft.

Die Flüssigkeit wird mit Hilfe eines Einlaufstücks in die Kanäle eingeleitet, wobei das Einlaufstück an die der Druckseite abgewandten Kanalenden des Bündels druckfest dichtend angesetzt wird.

Ein entsprechendes Einlaufstück kann in vielfältiger Weise gestaltet sein, um einen druckfest dichtenden Ansatz an einem Kanalbündel zu ermöglichen. Es ist möglich ein Einlaufstück zu verwenden, welches auf die Abmessungen der Kanäle abgestimmt ist und dieses in zeitlichen Abständen um ein Vielfaches einer Kanalabmessung zu verschieben, so daß ein anderes Kanalbündel unter Druck durchströmt wird. Es kann jedoch ebenso gut ein universelles Einlaufstück verwendet werden, dessen Dichtung breiter als die maximale Abmessung eines Kanals ist, so daß kein Druckverlust durch nur teilweise gedichtete Kanalenden auftritt. In diesem Fall wird nämlich jeder Kanal, der in seinem Öffnungsbereich nur teilweise druckbeaufschlagt ist im übrigen Öffnungsbereich dichtend abgedeckt.

Die bei der Behandlung unter Druck eingeleitete Flüssigkeit durchströmt die Kanäle des Bündels entgegen der Schwerkraft und tritt an der Druckseite des Katalysators (oben liegend) aus den Kanälen des Bündels aus. Dort tritt die Flüssigkeit in andere Kanäle ein (und zwar in solche Kanäle, die nicht durch ausströmendes Fluid blockiert sind) und durchströmt diese Kanäle unter Einwirkung der Schwerkraft von der Druckseite her in der Richtung, die im Betrieb des Katalysators auch das zu behandelnde Fluid (z.B. Rauchgas) nimmt (nach unten).

Das erfindungsgemäße Verfahren hat den Vorteil, daß es an Katalysatoren ausgeführt werden kann, ohne deren Ausbau zu erfordern, was Kosten für Ausfallzeiten und Personal einspart. Zur Ausführung des Verfahrens braucht lediglich Material bzw. Gerät an der Unterseite des Katalysators bereitgestellt werden, da auf dieser Seite die Flüssigkeit unter Druck in die Kanäle eingebracht wird, und auf derselben Seite unter Einwirkung der Schwerkraft auch wieder austritt. Die Flüssigkeit wird einseitig eingeleitet und ggf. aufgefangen.

Das erfindungsgemäße Verfahren ermöglicht außerdem eine besonders effektive Reinigung, da die Kanäle entgegen der Betriebs-Strömungsrichtung durchströmt werden. Durch dieses "Rückspülen" der Kanäle sind Verstopfungen und Verunreinigungen besser zu entfernen.

Erfindungsgemäß werden nacheinander verschiedene, immer jeweils ein Bündel von Kanälen bildende Kanäle durchströmt, so daß jeder Kanal nacheinander in beiden Richtungen gespült wird. Der Kanal wird unter Druck von der der Druckseite entgegengesetzten Seite aus gespült, sofern er zu dem derzeit gewählten Bündel gehört und anschließend von der Druckseite her durch Einwirkung der Schwerkraft durchströmt, sobald er dem derzeit gewählten Bündel nicht zugehört, sondern diesem benachbart ist. Auf diese Weise können alle Kanäle in zwei verschiedenen Spülrichtungen durchströmt werden.

Das Verfahren ist auf Katalysatoren mit beliebigem Aufbau anwendbar, einzige Einschränkung ist das Erfordernis durchströmbarer Kanäle. Insbesondere kann der Querschnitt der Kanäle eine beliebige Geometrie aufweisen, z.B. quadratisch, rechteckig, teilweise abgerundet oder unregelmäßig. Die Kanäle brauchen auch nicht sämtlich identische Querschnitte aufweisen. Entsprechend sind z.B. auch Kanal-Katalysatoren in Modulbauweise oder Platten-Katalysatoren behandelbar.

Es ist vorteilhaft, wenn die aus dem der Druckseite abgewandten Kanalenden ausströmende Flüssigkeit aufgefangen und abgeleitet wird. Dabei ist es insbesondere vorteilhaft, wenn die ausströmende Flüssigkeit mit Hilfe einer das Einlaufstück umgebende Auffangvorrichtung aufgefangen wird.

Einlaufstück und Auffangvorrichtung können gekoppelt sein, so daß die Benutzung einer entsprechenden Vorrichtung und die Durchführung des erfindungsgemäßen Verfahrens besonders einfach zu bewerkstelligen sind, da Einlaufstück und Auffangvorrichtung gemeinsam umgesetzt werden können und Einlaufstück und Auffangvorrichtung jederzeit zueinander ausgerichtet sind. Die Kopplung kann verstellbar gestaltet sein, so daß die Ausrichtung von Einlaufstück und Auffangvorrichtung zueinander variabel ist. Wenn z.B. Einlaufstück und Auffangvorrichtung jeweils einen rechteckigen Öffnungsbereich aufweisen, kann das Einlaufstück bei Behandlung von zentralen Kanalbündeln zentriert zu der Auffangvorrichtung angeordnet sein. Bei der Behandlung von Kanalbündeln in Randbereichen der Katalysatoren kann das Einlaufstück zu der Auffangvorrichtung verschoben, z.B. in nahe des Randbereichs der Auffangvorrichtung angeordnet sein.

Es ist besonders vorteilhaft, wenn die aufgefangene Flüssigkeit für die Spülung der Kanäle erneut verwendet wird.

Das erfindungsgemäße Verfahren ist auf diese Weise unter ökologischen Aspekten besonders günstig durchzuführen. Vorzugsweise wird die Flüssigkeit nach dem Auffangen und vor der erneuten Verwendung einem Ionentauscher zugeführt und/oder es wird ein Destillationsschritt durchgeführt.

Der unter Druck in ein Bündel von Kanälen eingeleiteten Flüssigkeit kann zur Verbesserung der Reinigungswirkung und Erhöhung der Aktivität des Katalysators ein Reinigungsmittel beigefügt sein, oder ein Gas, ein Abrasionsmittel oder eine katalytisch relevante Substanz zugemischt werden.

Es ist besonders vorteilhaft, wenn zusätzlich zu der Spülung mit Hilfe des Einlaufstücks Ultraschall- oder Niederfrequenzschwingungen übertragen werden.

Die übertragenen Schallschwingungen tragen bei Übertragung durch die Flüssigkeit oder das Material des Katalysators zur Reinigung der Kanäle zusätzlich bei und lösen Verstopfungen und Verschmutzungen, welche anschließend durch den Flüssigkeitsstrom entfernt werden.

Weitere vorteilhafte Ausführungsform des erfindungsgemäßen Verfahrens sind in den Patentansprüchen beschrieben.

Die Erfindung wird nun anhand der beiliegenden Zeichnungen näher erläutert.

Figur 1 zeigt eine schematische Perspektivansicht eines Katalysatormoduls mit einer Mehrzahl von Strömungskanälen sowie eines Katalysatorblocks mit einer Mehrzahl von Katalysatormodulen.

Figur 2 zeigt eine schematische Darstellung der Durchführung der erfindungsgemäßen Verfahrens.

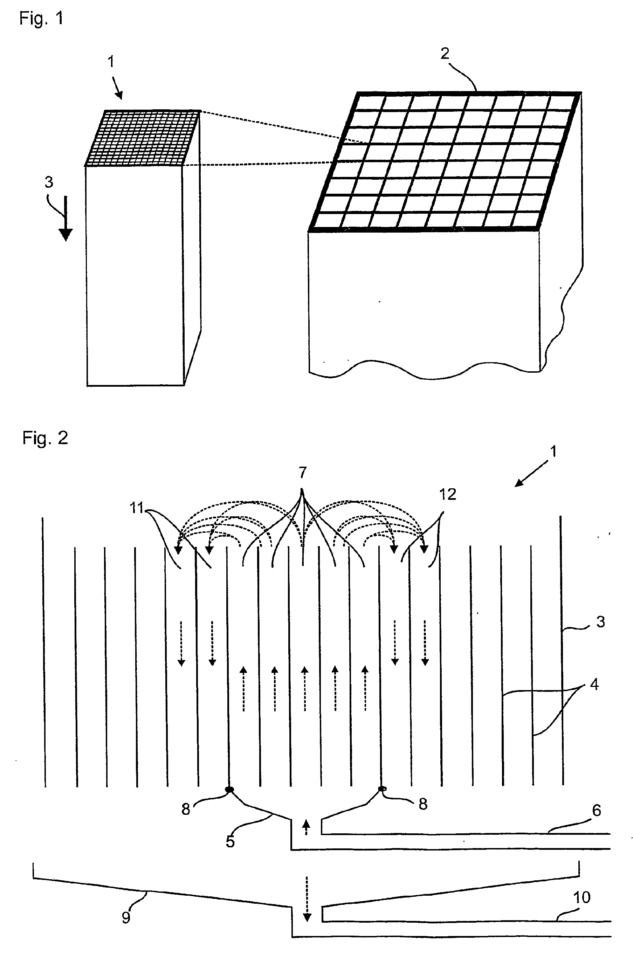

In Figur 1 ist ein Katalysatormodul 1 gezeigt. Eine Mehrzahl derartiger Katalysatormodule 1 wird in einem Metallrahmen 2 in einer Fluidströmung montiert, die aus von einem Verbrennungsraum eines Kraftwerks abgeleiteten Rauchgasen besteht. Die Strömungsrichtung 3 der Rauchgase ist in Figur 1 dargestellt und verläuft in Richtung der Wirkung der Schwerkraft, also von oben nach unten.

Figur 2 zeigt schematisch einen Querschnitt durch ein Katalysatormodul 1. Die Außenwandungen 3 und eine Mehrzahl von Innenwandungen 4 bilden Strömungskanäle für das Rauchgas. Da der Katalysator für die Durchführung des erfindungsgemäßen Verfahrens außer Betrieb genommen ist, ist in der in Figur 2 dargestellten Situation keine Rauchgasströmung vorhanden. Im Betrieb stellt die in Figur 2 in der Zeichnungsebene oben liegende Seite die Druckseite für die Fluidströmung dar, während die unten liegende Seite des Katalysators 1 die der Druckseite abgewandte Seite des Katalysators ist. Ein Einlaufstück 5 mit einer Zuleitung 6 wird von unten druckdicht an ein Bündel von Kanälen 7 angedrückt. Dichtungen 8 ermöglichen eine flüssigkeitsdichte Abdichtung des Einlaufstücks 5 an den Wandungen 3 oder 4. Unterhalb des Einlaufstücks 5 ist eine Auffangwanne 9 angeordnet, deren zum Zentrum abfallender Boden in eine Ableitung 10 mündet.

Eine unter Druck in die Zuleitung 6 eingeleitete Flüssigkeit wird über das Einlaufstück 5 in das Bündel der Kanäle 7 verteilt und entgegen der Wirkung der Schwerkraft durch diese Kanäle nach oben geleitet. Am oberen Ende der Kanäle 7 tritt die Flüssigkeit aus und verteilt sich in umliegende Kanäle 11 und 12, die an das Kanalbündel 7 angrenzen oder diesem benachbart sind (dargestellt durch unterbrochene Pfeile). Die Kanäle 11 und 12 werden unter Einwirkung der Schwerkraft nach unten durchströmt und die unten austretende Flüssigkeit gelangt in die Auffangwanne 9 und wird durch die Ableitung 10 abgeleitet. Die abgeleitete Flüssigkeit kann aufbereitet und unter Druck erneut durch die Zuleitung 6 zur Reinigung der Kanäle verwendet werden.

In der dargestellten Ausführungsform ist das Einlaufstück 5 mit seiner Zuleitung 6 unabhängig von der Auffangwanne 9 bewegbar. Dadurch ist es möglich, auch am Rand befindliche Kanäle von unten mit Druck zu spülen, das Einlaufstück 5 also zu der Auffangwanne 9 dezentral versetzt zu verwenden.

Im Rahmen der Erfindung sind zahlreiche Abwandlungen möglich. Z.B. kann die Flüssigkeit nach dem Auffangen ganz oder zum Teil entsorgt werden oder auch nur teilweise aufbereitet werden. Bei der Aufbereitung können über eine zusätzliche Feststoffausschleusung ungelöste Flugaschepartikel, Steine oder andere Feststoffe ausgeschleust werden. In einem Vorratsgefäß, welches die Flüssigkeit zur Spülung der Kanäle enthält, können Mischungseinrichtungen (z.B. Rührer) vorgesehen sein und einem Flüssigkeits-Kreislauf können Wasser, Deionat oder vorbereitete Reinigungslösungen sowie flüssige oder feste Hilfsstoffe zugeführt werden. Solche Hilfsstoffe können z.B. sein: Mittel zum Einstellen des pH-Wertes, Mittel zum Einstellen des Redoxpotentials oder zur Veränderung der Oberflächenspannung der Flüssigkeit, abrasive Feststoffe zur Verstärkung des Reinigungseffekts, katalytisch aktive Substanzen etc. Ferner können bei dem Verfahren auch Heiz- oder Kühlaggregate sowie Wärmetauscher verwendet werden.

Um eine längere verweilzeit der Flüssigkeit in den Kanälen und damit eine längere Kontaktzeit der Flüssigkeit mit den Oberflächen des Katalysators zu ermöglichen, besteht außerdem die Möglichkeit, solche Kanäle, die nicht unter Druck mit Flüssigkeit gespült werden, abzudichten. In diesem Fall "steht" die Flüssigkeit für eine Zeitdauer in diesen Kanälen. Dazu kann z.B. ein weiteres Einlaufstück verwendet werden, welches eine Ablaßvorrichtung aufweist, mit dem bei Bedarf die Flüssigkeit aus Kanälen in die Auffangwanne abzuleiten ist. Auch ist eine Verwendung eines Auslaufstücks möglich, so daß gezielt ein Kanal befüllt und abgelassen werden kann. In diesem Fall ist die Verbindung der Stücke über Rohrleitungen und Ventile sinnvoll, so daß die Stücke abwechselnd als Ein- oder Auslaufstück genutzt werden können.

## Patentansprüche

1. Verfahren zum Behandeln von Katalysatoren mit einer Mehrzahl paralleler Kanäle, die im Betrieb von einer Druckseite aus durchströmt werden,
wobei die Katalysatoren zum Behandeln außer Betrieb genommen und im montierten Zustand mit einer Flüssigkeit gespült werden, indem die Flüssigkeit durch die Kanäle geleitet wird,
**dadurch gekennzeichnet,**
**daß** ein Einlaufstück an der Druckseite abgewandter Kanalenden eines Bündels von benachbarten Kanälen druckfest dichtend angesetzt wird,
**daß** die Flüssigkeit mit Hilfe des Einlaufstücks unter Druck in das Bündel von benachbarten Kanälen eingeleitet wird,
wobei die Kanäle des Bündels entgegen der Schwerkraft durchströmt werden, indem die Flüssigkeit durch die Kanäle nach oben geleitet wird, und
wobei die Flüssigkeit an der Druckseite zugewandten Enden der Kanäle des Bündels austritt, dort in Enden anderer Kanäle eintritt und durch diese anderen Kanäle unter Einwirkung der Schwerkraft zurückströmt.

2. Verfahren nach Anspruch 1, **dadurch gekennzeichnet, daß** die aus den der Druckseite abgewandten Kanalenden ausströmende Flüssigkeit aufgefangen und abgeleitet wird.

3. Verfahren nach Anspruch 2, **dadurch gekennzeichnet, daß** die ausströmende Flüssigkeit mit Hilfe einer das Einlaufstück umgebenden Auffangvorrichtung aufgefangen wird.

4. Verfahren nach Anspruche 2, **dadurch gekennzeichnet, daß** die aufgefangene Flüssigkeit für die Spülung der Kanäle erneut verwendet wird.

5. Verfahren nach Anspruch 4, **dadurch gekennzeichnet, daß** die Flüssigkeit vor der erneuten Verwendung einen Ionentauscher durchläuft.

6. Verfahren nach einem der Ansprüche 4 oder 5, **dadurch gekennzeichnet, daß** die Flüssigkeit vor der erneuten Verwendung einen Destillationsschritt durchläuft.

7. Verfahren nach einem der Ansprüche 4 oder 5, **dadurch gekennzeichnet, daß** die Flüssigkeit vor der erneuten Verwendung eine Feststoffausschleusung durchläuft.

8. Verfahren nach einem der Ansprüche 1 bis 5, **dadurch gekennzeichnet, daß** eine Reinigungslösung als Flüssigkeit verwendet wird.

9. Verfahren nach einem der Ansprüche 1 bis 5, **dadurch gekennzeichnet, daß** zusammen mit der Flüssigkeit ein Gas in die Kanäle eingeleitet wird.

10. Verfahren nach einem der Ansprüche 1 bis 5, **dadurch gekennzeichnet, daß** mit der Flüssigkeit eine katalytisch relevante Substanz in die Kanäle eingeleitet wird.

11. Verfahren nach einem der Ansprüche 1 bis 5, **dadurch gekennzeichnet, daß** zusammen mit der Flüssigkeit ein Abrasionsmittel in die Kanäle eingeleitet wird.

12. Verfahren nach einem der Ansprüche 1 bis 5, **dadurch gekennzeichnet, daß** mit Hilfe des Einlaufstücks Ultraschall- oder Niederfrequenzschwingungen auf die Kanäle übertragen werden.

13. Verfahren nach einem der Ansprüche 1 bis 5, **dadurch gekennzeichnet, daß** der Katalysator nach dem Behandeln getrocknet wird.

## Claims

1. A method of treating catalysts with a plurality of parallel channels, through which, in use, flow occurs from a pressure side, wherein the catalysts are taken out of operation for the treatment and are flushed in the installed state with a liquid by conducting the liquid through the channels, **characterised in that** an inlet member is positioned in a pressure-resistant sealed manner against the ends remote from the pressure side of a group of adjacent passages, that the liquid is introduced under pressure with the aid of the inlet member into the group of adjacent passages, wherein the flow through the passages of the group occurs against gravity by conducting the liquid upwardly through the passages, and wherein the liquid discharges from the ends directed towards the pressure side of the passages of the group and enters into other passages there and flows back through these other passages under the action of gravity.

2. A method as claimed in Claim 1, **characterised in that** the liquid flowing out of the ends of the passages remote from the pressure side is collected and conducted away.

3. A method as claimed in Claim 2, **characterised in that** the outflowing liquid is collected with the aid of a collecting device surrounding the inlet member.

4. A method as claimed in Claim 2, **characterised in that** the collected liquid is used again for the flushing of the passages.

5. A method as claimed in Claim 4, **characterised in that** the liquid flows through an ion exchanger before being re-used.

6. A method as claimed in one of Claims 4 or 5, **characterised in that** the liquid passes through a distillation step before being re-used.

7. A method as claimed in one of Claims 4 or 5, **characterised in that** the liquid passes through a solids removal stage before being re-used.

8. A method as claimed in one of Claims 1 to 5, **characterised in that** a cleaning solution is used as the liquid.

9. A method as claimed in one of Claims 1 to 5, **characterised in that** a gas is introduced into the passages together with the liquid.

10. A method as claimed in one of Claims 1 to 5, **characterised in that** a catalytically relevant substance is introduced into the passages with the liquid.

11. A method as claimed in one of Claims 1 to 5, **characterised in that** an abrasive agent is introduced into the passages together with the liquid.

12. A method as claimed in one of Claims 1 to 5, **characterised in that** ultrasonic or low frequency vibrations are transmitted to the passages with the aid of the inlet member.

13. A method as claimed in one of Claims 1 to 5, **characterised in that** the catalyst is dried after the treatment.

## Revendications

1. Procédé pour le traitement de catalyseurs avec une pluralité de canaux parallèles, qui sont parcourus en service à partir d'un côté sous pression,
dans lequel les catalyseurs sont mis hors service pour le traitement et sont rincés à l'état monté par un liquide en acheminant le liquide à travers les
canaux,
**caractérisé en ce que**
une pièce d'admission est appliquée de manière étanche et en résistant à la pression sur les extrémités de canaux, opposées au côté sous pression, d'un faisceau de canaux adjacents,
le liquide est introduit à l'aide de la pièce d'admission sous pression dans le faisceau de canaux adjacents,
dans lequel les canaux du faisceau sont parcourus à l'encontre de la gravité en acheminant le liquide vers le haut à travers les canaux, et
dans lequel le liquide sort aux extrémités, tournées vers le côté sous pression, des canaux du faisceau, d'où il entre dans les extrémités d'autres canaux et reflue par ces autres canaux sous l'effet de la gravité.

2. Procédé selon la revendication 1, **caractérisé en ce que** le liquide sortant des extrémités de canaux opposées au côté sous pression est recueilli et évacué.

3. Procédé selon la revendication 2, **caractérisé en ce que** le liquide sortant est recueilli à l'aide d'un dispositif collecteur entourant la pièce d'admission.

4. Procédé selon la revendication 2, **caractérisé en ce que** le liquide recueilli est réutilisé pour le rinçage des canaux.

5. Procédé selon la revendication 4, **caractérisé en ce que** le liquide traverse un échangeur d'ions avant d'être réutilisé.

6. Procédé selon l'une quelconque des revendications 4 ou 5, **caractérisé en ce que** le liquide traverse une étape de distillation avant d'être réutilisé.

7. Procédé selon l'une quelconque des revendications 4 ou 5, **caractérisé en ce que** le liquide traverse une étape d'élimination de solides avant d'être réutilisé.

8. Procédé selon l'une quelconque des revendications 1 à 5, **caractérisé en ce que** l'on utilise une solution de nettoyage comme liquide.

9. Procédé selon l'une quelconque des revendications 1 à 5, **caractérisé en ce que** l'on introduit, conjointement avec le liquide, un gaz dans les canaux.

10. Procédé selon l'une quelconque des revendications 1 à 5, **caractérisé en ce que** l'on introduit, avec le liquide, une substance catalytiquement importante dans les canaux.

11. Procédé selon l'une quelconque des revendications 1 à 5, **caractérisé en ce que** l'on introduit, conjointement avec le liquide, un agent abrasif dans les canaux.

12. Procédé selon l'une quelconque des revendications 1 à 5, **caractérisé en ce que** des vibrations à ultrasons ou à basses fréquences sont transmises aux canaux à l'aide de la pièce d'admission.

13. Procédé selon l'une quelconque des revendications 1 à 5, **caractérisé en ce que** le catalyseur est séché après le traitement.
